# EUROPÄISCHE PATENTSCHRIFT

(11) **EP 1 818 858 B1**
(45) Veröffentlichungstag und Bekanntmachung des Hinweises auf die Patenterteilung: **26.12.2012**
(21) Anmeldenummer: 07002809.7
(22) Anmeldetag: 09.02.2007
(51) Int. Cl.: G06K 19/07

(54) **Transponder und Verfahren zur drahtlosen Datenübertragung**
Transponder and method for wireless data transfer
Transpondeur et procédé destiné à la transmission de données sans fil

(30) Priorität: 10.02.2006 DE 102006007261
(43) Veröffentlichungstag der Anmeldung: 15.08.2007
(73) Patentinhaber: Atmel Automotive GmbH, 74072 Heilbronn (DE)
(72) Erfinder: Berhorst, Martin, 69123 Heidelberg (DE); Kurz, Alexander, 74523 Schwäbisch Hall (DE); Schneider, Peter, 74855 Hassmersheim (DE)
(74) Vertreter: Grünecker, Kinkeldey, Stockmair & Schwanhäusser

(56) Entgegenhaltungen:
- EP-A- 0 732 663
- EP-A- 0 829 940
- WO-A-02/09028
- DE-A1- 19 744 782

## Beschreibung

Die Erfindung betrifft einen Transponder nach dem Oberbegriff des Anspruchs 1 sowie ein Verfahren zur drahtlosen Datenübertragung nach dem Oberbegriff des Anspruchs 6.

Kontaktlose Identifikationssysteme oder so genannte Radio-Frequency-Identification(RFID)-Systeme bestehen üblicherweise aus einer Basisstation bzw. einem Lesegerät oder einer Leseeinheit und einer Vielzahl von Transpondern oder Remote-Sensoren. Die Transponder bzw. deren Sende- und Empfangseinrichtungen verfügen üblicherweise nicht über einen aktiven Sender für die Datenübertragung zur Basisstation. Derartige nicht aktive Systeme werden als passive Systeme bezeichnet, wenn sie keine eigene Energieversorgung aufweisen, und als semipassive Systeme bezeichnet, wenn sie eine eigene Energieversorgung aufweisen. Passive Transponder entnehmen die zu ihrer Versorgung benötigte Energie dem von der Basisstation emittierten elektromagnetischen Feld.

Zur Datenübertragung zwischen dem Transponder und der Basisstation, beispielweise für einen Programmier vorgang des Transponders, weist der Transponder eine Schnittstelle eines bestimmten Schnittstellen typs auf, der kompatibel zum entsprechenden Schnitt stellentyp der Basistation ist. Die Schnittetellentypen können in einer ersten groben Gliederung in kontaktbehaftete und kontaktlose Typen eingetellt werden.

Die Schnittstellentypen, bei denen die Datenübertragung kontakt- bzw.. berührungslos erfolgt, unterscheiden sich unter anderem durch die zur Datenübertragung verwendete Arbeits- bzw. Trägerfrequenz, d.h. die durch die Basisstation gesendete Frequenz. Häufig verwendete Frequenzen sind beispielsweise 125 kHz (LF-Bereich), 13,56 MHz (RF-Bereich), eine Frequenzberelch zwischen 860 MHz bis 960 MHz (UHF-Bereich) und ein Frequenzbereich grö-βer als 3 GHz (Mikrowollenbereich).

Ein weiteres Unterscheidungsmerkmal unterschiedlicher Schnittstellentypen ist die Art der Kopplung zwischen den jeweiligen Schnittstellen des Transponders und der Basisstation. Hierbei wird unter anderem zwischen der so genannten Induktiven oder magnetischen Kopplung und der so genannten Fernfeldkopplung unterschieden. Vereinfacht dargestellt, bilden bei der Induktiven oder Nahfeldkopplung Antennenspule der Basisstation und eine an einem Eingangskreis des Transponders angeschlossene Antennenspule einen Transformator, weshalb diese Kopplungsart auch als transformatorische Kopplung bezeichnet wird. Bei der induktiven Kopplung ist eine maximale Entfernung zwischen dem Transponder und der Basisstation auf den Bereich eines Nahfeldes der verwendeten Antennen beschränkt. Der Nahfeldbereich wird im wesentlichen durch die Arbeitsfrequenz der Schnittstelle festgelegt.

Verfahren und Vorrichtungen, welche unter anderem eine transformatorische Kopplung benutzen sind in der DE 197 44 782 A1, in der EP 0732 663 A2, in der EP 0829 940 A2 und in der WO02/09028 A1 offenbart. Hierbei wird In der DE 197 44 782 A1 ein Verfahren zur Reduzierung der Abschwingzeiten mittels einer Begrenzerschaltung offenbart, die hohe induzierte Spannungen im Eingangskreis auf einen Schwellwert klemmt.

Zur Datenübertragung von einem Transponder zur Basisstation wird bei der induktiven Kopplung in der Regel, die sogenannte Lastmodulation verwendet, siehe hierzu beispielsweise auch Finkenzeller, Kapitel 3.2.1.2.1. "Lastmodulation".

Zur Datenübertragung von der Basisstation zum Transponder sendet die Basisstation bei der induktiven Kopplung üblicherweise ein Trägersignal mit einer Frequenz in einem Frequenzbereich von 50kHz bis 250kHz. Zur Einleitung der Datenübertragung erzeugt die Basisstation durch Amplitudenmodulation des Trägersignals zunächst eine kurze Feldlücke oder eine so genannte "Gap", d.h. die Amplitude des Trägersignals wird kurzzeitig, beispielsweise für ca. 50us bis 400us, gedämpft bzw. abgeschwächt oder vollständig unterdrückt.

Zeichen, die im Anschluss an die Einleitung der Datenübertragung von der Basisstation gesendet werden, werden durch zugehörige Zeitdauern zwischen jeweils zeitlich aufeinanderfolgenden Feldlücken kodiert. Einem ersten Zeichenwert wird hierbei eine erste Zeitdauer zugeordnet und mindestens einem zweiten Zeichenwert wird eine zweite Zeitdauer zugeordnet. Zur Dekodierung der übertragenen Zeichen ermittelt der Transponder die jeweiligen Zeitdauern zwischen den Feldlücken und bestimmt aus der ermittelten Zeitdauer den Wert des übertragenen Zeichens.

Zur fehlerfreien Datenübertragung bzw. Dekodierung der Zeichen ist es notwendig, dass die von der Basisstation erzeugten und im Transponder durch induktive Kopplung empfangenen Signalverläufe festgelegte, maximale Toleranzen aufweisen, beispielsweise hinsichtlich ihres zeitlichen Verlaufs und/oder der verwendeten Pegel.

Zur Vergrößerung der erzielbaren Reichweiten zwischen Basisstation und passiven Transpondern wird die Güte eines Parallelschwingkreises, der aus der Antennenspule und einem hierzu parallel geschalteten Kondensator gebildet wird, erhöht, um die Versorgung der passiven Transponder aus dem von der Basisstation gesendeten Feld auch bei größeren Entfernungen zu ermöglichen. Aufgrund der reduzierten Dämpfung des Schwingkreises bewirkt dies, dass bei einer Feldlücke die Spulenspannung bzw. die Spannung am Parallelschwingkreis des Transponders langsamer absinkt als bei einem Schwingkreis mit geringerer Güte und somit höherer Dämpfung. Da die Feldlücke jedoch im Transponder erst erkannt werden kann, wenn die Spulenspannung bzw. eine aus der Spulenspannung durch Gleichrichtung gewonnene Spannung unter ein einstellbares Potential gesunken ist, werden Feldlücken im Vergleich zu einem Schwingkreis mit geringer Güte verzögert erkannt. Dies führt im Ergebnis dazu, dass die Zeitdauer der im Transponder detektierten Feldlücken verkürzt und die Zeitdauern zwischen den Feldlücken verlängert werden. Diese Veränderung des Timings der im Transponder detektierten Signalverläufe wird unmittelbar von der Güte des Schwingkreises beeinflusst. Da das Timing jedoch innerhalb vorbestimmter Grenzwerte liegen muss, sollte das von der Basisstation gesendete Signal ein Timing aufweisen, welches von der Güte des Schwingkreises des Transponders abhängig ist, da sonst Übertragungsfehler entstehen können.

Der Erfindung liegt die Aufgabe zugrunde, einen Transponder und ein Verfahren zur drahtlosen Datenübertragung zur Verfügung zu stellen, die eine hohe Übertragungsreichweite zwischen Basisstation und Transponder und ein im wesentlichen güteunabhängiges Timing der von der Basisstation erzeugten Signale ermöglichen.

Die Erfindung löst diese Aufgabe durch einen Transponder nach Anspruch 1 sowie ein Verfahren nach Anspruch 6.

Der erfindungsgemäße Transponder umfasst einen Eingangskreis mit Eingangsanschlüssen zum Anschließen einer Antennenspule und/oder eines LC-Schwingkreises zur Datenübertragung mit einer Basisstation mittels induktiver Kopplung, ein erstes ansteuerbares Schaltmittel, mindestens einen Widerstand, der in Serie mit dem ersten ansteuerbaren Schaltmittel zwischen die Eingangsanschlüsse des Eingangskreises eingeschleift ist, und eine Steuereinheit, die derart ausgebildet ist, dass sie das erste Schaltmittel durchschaltet, sobald bzw. wenn eine an den Eingangsanschlüssen anstehende Spannung unter einen ersten einstellbaren Schwellenwert fällt, und wieder unterbricht, sobald bzw. wenn die an den Eingangsanschlüssen anstehende Spannung für eine einstellbare Zeitdauer über dem ersten einstellbaren Schwellenwert und/oder über einem zweiten einstellbaren Schwellenwert liegt. Der zweite einstellbare Schwellenwert ist bevorzugt größer als der erste einstellbare Schwellenwert. Die an den Eingangsanschlüssen anstehende Spannung kann zur Auswertung der Signalpegel auch gleichgerichtet werden. Das geschlossene Schaltmittel in Verbindung mit dem Widerstand bewirkt, dass die Dämpfung des Schwingkreises in Abhängigkeit vom einem gewählten Widerstandswert zunimmt, sobald eine erste Feldlücke detektiert wird. Nach der Detektion der ersten Feldlücke führt dies zu einem raschen, im wesentlichen güteunabhängigen Abklingen der Spulenspannung bei nachfolgend erzeugten Feldlücken. Am Ende der Datenübertragung zwischen der Basisstation und dem Transponder, d.h. sobald die an den Eingangsanschlüssen anstehende Spannung für die einstellbare Zeitdauer über dem ersten und/oder über dem zweiten einstellbaren Schwellenwert liegt, wird das Schaltmittel unterbrochen, wodurch die wirksame Güte des Schwingkreises wieder stark ansteigt, wodurch eine hohe Reichweite erzielbar ist. Insgesamt bedeutet dies, dass trotz hoher Güten des Schwingkreises ein einheitliches Timing der im Transponder empfangenen bzw. der von der Basisstation gesendeten Signale erzielbar ist. Auf diese Weise lassen sich hohe Übertragungsreichweiten und ein güteunabhängiger Betrieb kombinieren.

In einer Weiterbildung des Transponders ist dieser passiv. Insbesondere bei passiven Transpondern lassen sich mit dem erfindungsgemäßen Verfahren deutliche Reichweitenverbesserungen bei gleichzeitiger Beibehaltung der Datenübertragungsqualität erzielen.

In einer Weiterbildung des Transponders ist das Schaltmittel ein Transistor, insbesondere ein MOS-Transistor.

In einer Weiterbildung des Transponders ist der Eingangskreis für die Verarbeitung von Frequenzen in einem Frequenzbereich von 50kHz bis 250kHz, insbesondere 125kHz, ausgebildet.

In einer Weiterbildung des Transponders umfasst der Eingangskreis für die Datenübertragung zur Basisstation eine Modulationseinheit mit einer ansteuerbaren Spannungsbegrenzungseinheit, die derart ausgebildet ist, dass sie die an den Eingangsanschlüssen anstehende Spannung auf einen ersten einstellbaren Maximalwert oder auf einen zweiten einstellbaren Maximalwert begrenzt. Die Modulationseinheit dient insbesondere zur Lastmodulation. Die Spannungsbegrenzungseinheit enthält Schaltungsteile, welche die an den Eingangsanschlüssen anstehende Spannung ansteuerungszustandsabhängig auf den ersten einstellbaren Maximalwert oder auf den zweiten einstellbaren Maximalwert begrenzen bzw. klemmen. Bevorzugt ist der zweite Maximalwert kleiner als der erste Maximalwert und die Spannungsbegrenzungseinheit wird derart angesteuert, dass sie den zweiten, d.h. kleineren, Maximalwert einstellt, wenn das erste Schaltmittel durchgeschaltet ist, und den ersten, d.h. größeren, Maximalwert einstellt, wenn das erste Schaltmittel unterbrochen ist. Aufgrund der daraus resultierenden gleichzeitigen Spannungsreduktion, wenn der Widerstand zur Dämpfungserhöhung zugeschaltet wird, wird die Zeitdauer nochmals reduziert, welche die Spulenspannung benötigt, um bei einer Feldlücke unter den ersten Schwellenwert zur Detektion der Feldlücke abzusinken.

Bei dem Verfahren zur drahtlosen Datenübertragung mittels induktiver Kopplung zwischen einer Basisstation und einem Transponder, der einen Eingangskreis mit Eingangsanschlüssen zum Anschließen einer Antennenspule und/oder eines LC-Schwingkreises aufweist, wird eine ohmsche Last zwischen den Eingangsanschlüssen zugeschaltet, sobald eine an den Eingangsanschlüssen anstehende Spannung unter einen ersten einstellbaren Schwellenwert fällt, und wieder abgeschaltet, sobald bzw. wenn die an den Eingangsanschlüssen anstehende Spannung für eine einstellbare Zeitdauer über dem ersten einstellbaren Schwellenwert und/oder über einem zweiten einstellbaren Schwellenwert liegt.

Die Erfindung wird nachfolgend unter Bezugnahme auf die Zeichnungen beschrieben. Hierbei zeigen schematisch:
- Fig. 1: einen passiven Transponder mit einem Eingangskreis zum Anschluss einer Antennenspule zur induktiven Kopplung mit einer Basisstation und
- Fig. 2: Zeitablaufsdiagramme bei einer Datenübertragung von einer Basisstation zu dem Transponder von Fig. 1.

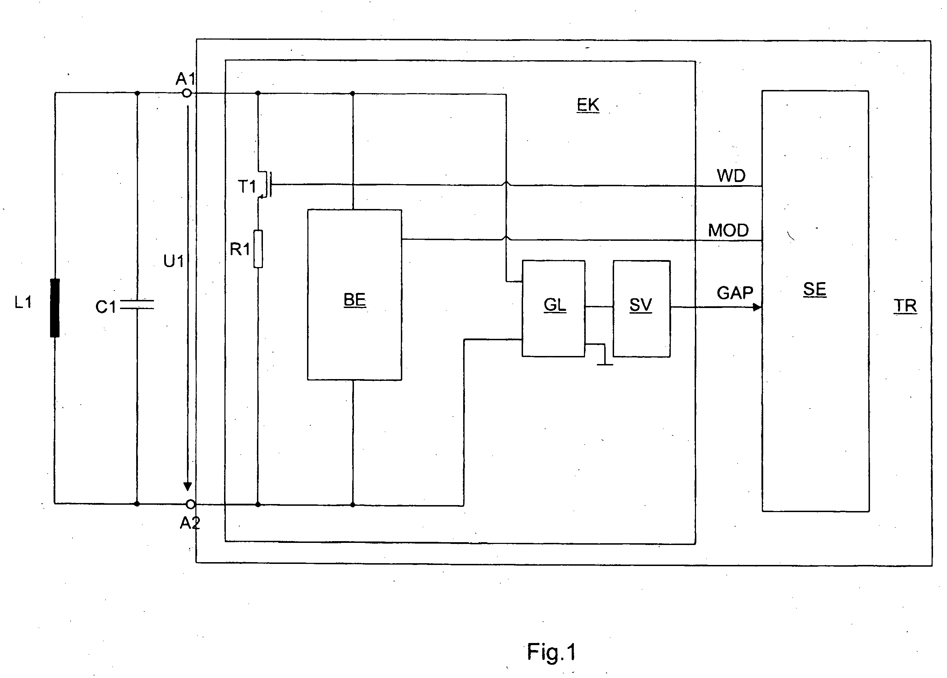

Fig. 1 zeigt einen passiven Transponder TR in Form eines integrierten Schaltkreises mit einem Eingangskreis EK mit Eingangsanschlüssen A1 und A2 zum Anschluss einer Antennenspule L1 zur induktiven Kopplung mit einer nicht gezeigten herkömmlichen Basisstation.

Der Antennenspule L1 ist ein Kondensator C1 parallel geschaltet, wobei die Antennenspule L1 und der Kondensator C1 einen Parallelschwingkreis bilden, dessen Resonanzfrequenz auf eine Sendefrequenz der Basisstation von 125kHz abgestimmt ist. Die Antennenspule L1 bildet mit einer nicht gezeigten Antennenspule der Basisstation eine transformatorische Kopplung.

Der Eingangskreis EK des Transponders TR umfasst eine ansteuerbare Spannungsbegrenzungseinheit BE als Teil einer nicht weiter gezeigten Modulationseinheit, die zur Datenübertragung vom Transponder TR zur Basisstation mittels Lastmodulation dient.

Zwischen die Eingangsanschlüsse A1 und A2 des Eingangskreises EK sind ein Schaltelement in Form eines MOS-Transistors T1 und ein Widerstand R1 seriell eingeschleift.

Eine an den Eingangsanschlüssen A1 und A2 anstehende Wechselspannung U1 speist einen Gleichrichter GL des Eingangskreises EK, der eine Versorgungsspannung für den Transponder TR erzeugt. Die gleichgerichtete Eingangsspannung wird einer Signalverarbeitungseinheit SV des Eingangskreises EK zur Feldlückendetektion zugeführt.

Der Transponder TR umfasst weiterhin eine Steuereinheit SE zur Steuerung der Transponderfunktionen, die als Mikroprozessor oder als Zustandsmaschine realisiert sein kann. Die Steuereinheit SE erzeugt ein Ansteuersignal WD für den Transistor T1, ein Ansteuersignal MOD für die Spannungsbegrenzungseinheit BE und empfängt ein Feldlückendetektionssignal GAP von der Signalverarbeitungseinheit SV.

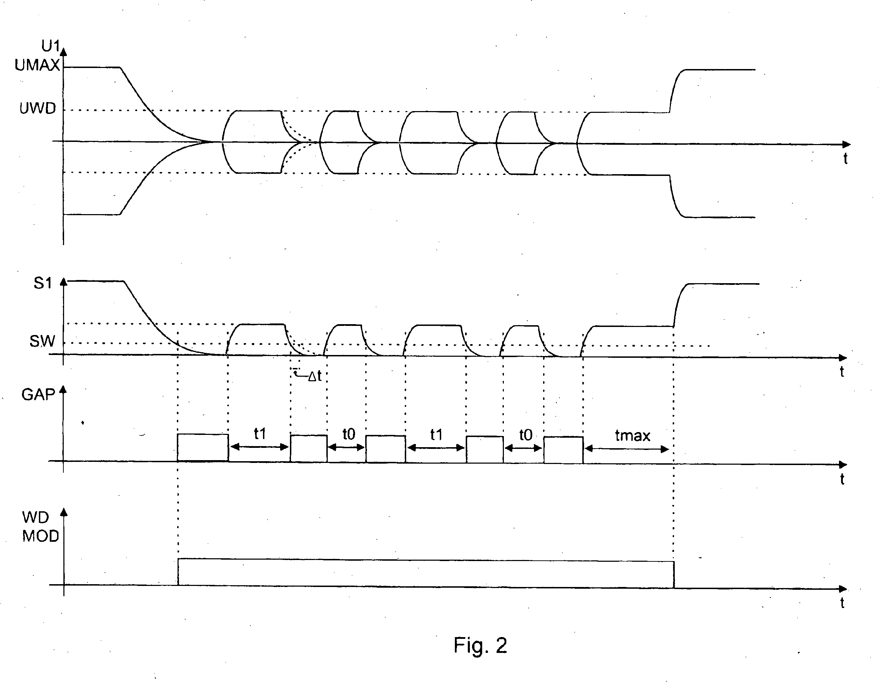

Fig. 2 zeigt Zeitablaufsdiagramme bei einer Datenübertragung von einer Basisstation zu dem Transponder von Fig. 1. Von der Spannung U1 ist lediglich die Hüllkurve dargestellt. Die gleichgerichtete Spannung U1 ist als Signal S1 wiederum als Hüllkurve dargestellt. In den unteren beiden Diagrammen sind das Feldlückendetektionssignal GAP bzw. die Transistoransteuersignale WD und MOD dargestellt. Im Falle eines Datenempfangs von der Basisstation können die Signale WD und MOD identische zeitliche Verläufe aufweisen.

Vor der Datenübertragung erzeugt die Basisstation durch ihre Antennenspule ein magnetisches Wechselfeld mit einer Frequenz von 125kHz, welches aufgrund der induktiven Kopplung die Wechselspannung U1 zwischen den Eingangsanschlüssen A1 und A2 induziert. Eine Amplitude der Wechselspannung U1 wird durch die Spannungsbegrenzungseinheit BE auf eine maximale Spannung UMAX begrenzt bzw. geklemmt.

Zur Einleitung der Datenübertragung im Rahmen eines schreibenden Zugriffs auf den Transponder TR erzeugt die Basisstation eine Feldlücke bzw. ein Gap durch Unterdrückung des Trägersignals. Die Spannung U1 des Parallelschwingkreises fällt in Abhängigkeit von dessen Güte nur langsam entlang der Hüllkurve ab. Der Verlauf der gleichgerichteten Spannung U1 wird in der Signalverarbeitungseinheit SV ausgewertet. Wenn die Spannung U1 einen Schwellenwert SW erstmalig unterschreitet, erzeugt die Signalverarbeitungseinheit SV ein aktives Signal GAP, d.h. zeigt der Steuereinheit SE die detektierte Feldlücke an.

Die Steuereinheit SE aktiviert daraufhin die Signale MOD und WD, d.h. der Transistor T1 wird durchgeschaltet bzw. durchgesteuert. Der durchgeschaltete Transistor T1 bewirkt, dass eine ohmsche Last in Form des Widerstands R1 zwischen die Eingangsanschlüssen A1 und A2 zugeschaltet wird, wodurch sich die Güte des Schwingkreises reduziert bzw. dessen Dämpfung erhöht. Dies bewirkt, dass die Hüllkurve der Spannung U1 im Fall einer Feldlücke deutlich schneller abklingt, d.h. nachfolgende Feldlücken sind mit einer deutlich geringeren Verzögerung detektierbar.

Dies ist exemplarisch für die zweite Feldlücke gezeigt, wobei der Signalverlauf mit geringerer Dämpfung, d.h. ohne zugeschalteten Widerstand R1, gestrichelt dargestellt ist. Wie aus Fig. 2 ersichtlich ist, ergibt sich bis zur Detektion der Feldlücke eine Zeitdifferenz Δt zwischen dem herkömmlichen, ungedämpften Signalverlauf und dem stärker gedämpften, erfindungsgemäßen Signalverlauf. Der erfindungsgemäße Signalverlauf entspricht daher wesentlich besser einem idealen Signalverlauf, bei dem die Spannung U1 bzw. das Signal S1 bei einer Feldlücke sprungförmig abnimmt, wodurch die Feldlücke unverzögert detektierbar ist.

Die Schwingkreisdämpfung wird hierbei im Wesentlichen vom Wert des Widerstands R1 bestimmt, d.h. die durch die Antennenspule L1 und den Kondensator C1 bedingten Anteile sind vernachlässigbar. Das Timing des von dem Transponder empfangenen Signals ist daher nach der Detektion der ersten Feldlücke unabhängig von der Qualität der Antennenspule L1 und des Kondensators C1, d.h. die Basisstation kann ihr Sendesignal timingunabhängig davon erzeugen, welcher Antennenspulentyp im Transponder eingesetzt wird.

Die mit dem aktiven Modulationssignal MOD angesteuerte Spannungsbegrenzungseinheit BE bewirkt, dass die Spannung U1 auf einen Wert UWD begrenzt bzw. geklemmt wird. Die Spannungsreduktion der Spannung U1 auf den maximalen Spannungswert UWD bewirkt ebenfalls eine schnellere Detektierbarkeit einer Feldlücke, da die Spannung U1 von einem niedrigeren Anfangswert auf den Schwellenwert SW abnimmt.

Nach der Einleitung der Datenübertragung durch Erzeugen der ersten Feldlücke schaltet die Basisstation ihr Trägersignal wieder ein. Aufgrund des aktivierten Modulationssignals MOD begrenzt die Spannungsbegrenzungseinheit BE die Spannung U1 auf den Wert UWD. Zeichen, die im Anschluss an die Einleitung der Datenübertragung von der Basisstation gesendet werden, werden durch zugehörige Zeitdauern t0 bzw. t1 zwischen jeweils zeitlich aufeinanderfolgenden Feldlücken kodiert. Einem ersten Zeichenwert "0" wird hierbei die Zeitdauer t0 und einem zweiten Zeichenwert "1" wird die Zeitdauer t1 zugeordnet. Zur Dekodierung der übertragenen Zeichen ermittelt der Transponder TR die jeweiligen Zeitdauern t0 bzw. t1 zwischen den Feldlücken und bestimmt aus der ermittelten Zeitdauer den Wert des übertragenen Zeichens. Im gezeigten Fall wird die exemplarische, binäre Zeichenfolge "1010" an den Transponder übertragen.

Wenn die Basisstation die gewünschte Anzahl von Zeichen übertragen hat, werden nachfolgend keine Feldlücken mehr durch sie erzeugt. Wenn eine maximale Zeitdauer tmax seit der letzten Feldlücke verstrichen ist, d.h. die an den Eingangsanschlüssen A1, A2 anstehende Spannung U1 für die Zeitdauer tmax über dem ersten Schwellenwert SW liegt, erkennt der Transponder TR das Ende der Datenübertragung. Daraufhin deaktiviert er die Signale WD und MOD. Dies bewirkt einerseits eine Güteerhöhung des Eingangsschwingkreises und andererseits eine Erhöhung des maximalen Werts der Spannung U1 auf den Wert UMAX, da die Spannungsbegrenzungseinheit BE aufgrund des deaktivierten Signals MOD die Spannung U1 auf den Maximalwert UMAX begrenzt. Zur Erkennung, ob die Datenübertragung beendet ist, kann anstatt des Schwellenwertes SW auch ein weiter, nicht gezeigter, beispielsweise größerer Schwellenwert verwendet werden, wobei dann entsprechend überprüft wird, ob die Spannung U1 für die maximale Zeitdauer tmax über diesem Schwellenwert liegt.

Die gezeigten Ausführungsformen ermöglichen eine hohe Übertragungsreichweite zwischen Basisstation und Transponder aufgrund der hohen einsetzbaren Güte der Eingangsschwingkreise aus Antennenspule L1 und Kondensator C1 und gleichzeitig ein im wesentlichen güteunabhängiges Timing der von der Basisstation erzeugten Signale.

## Patentansprüche

1. Transponder mit
- einem Eingangskreis (EK) mit Eingangsanschlüssen (A1, A2) zum Anschließen einer Antennenspule (L1) zur Datenübertragung mit einer Basisstation mittels induktiver Kopplung,
**gekennzeichnet durch**
- ein erstes ansteuerbares Schaltmittel (T1),
- mindestens einen Widerstand (R1), der in Serie mit dem ersten ansteuerbaren Schaltmittel (T1) zwischen die Eingangsanschlüsse (A1, A2) des Eingangskreises (EK) eingeschleift ist, und
- eine Steuereinheit (SE), die derart ausgebildet ist, dass sie das erste Schaltmittel (T1) durchschaltet, sobald eine an den Eingangsanschlüssen (A1, A2) anstehende Spannung (U1) unter einen ersten einstellbaren Schwellenwert (SW) fällt, und wieder unterbricht, sobald die an den Eingangsanschlüssen (A1, A2) anstehende Spannung (U1) für eine einstellbare Zeitdauer (tmax) über dem ersten einstellbaren Schwellenwert (SW) und/oder über einem zweiten einstellbaren Schwellenwert liegt.

2. Transponder nach Anspruch 1, **dadurch gekennzeichnet, dass** der Transponder ein passiver Transponder (TR) ist.

3. Transponder nach Anspruch 1 oder 2, **dadurch gekennzeichnet, dass** das Schaltmittel ein Transistor, insbesondere ein MOS-Transistor (T1), ist.

4. Transponder nach einem der vorhergehenden Ansprüche, **dadurch gekennzeichnet, dass** der Eingangskreis (EK) für die Verarbeitung von Frequenzen in einem Frequenzbereich von 50kHz bis 250kHz ausgebildet ist.

5. Transponder nach einem der Ansprüche 1 bis 4, **dadurch gekennzeichnet, dass** der Eingangskreis (EK) für die Datenübertragung zur Basisstation eine Modulationseinheit mit einer ansteuerbaren Spannungsbegrenzungseinheit (BE) umfasst, die derart ausgebildet ist, dass sie die an den Eingangsanschlüssen (A1, A2) anstehende Spannung (U1) auf einen ersten einstellbaren Maximalwert (UMAX) oder auf einen zweiten einstellbaren Maximalwert (UWD) begrenzt.

6. Verfahren zur drahtlosen Datenübertragung mittels induktiver Kopplung zwischen einer Basisstation und einem Transponder (TR), der einen Eingangskreis (EK) mit Eingangsanschlüssen (A1, A2) zum Anschließen einer Antennenspule (L1) aufweist, **dadurch gekennzeichnet, dass**
eine ohmsche Last (R1) zwischen den Eingangsanschlüssen (A1, A2) zugeschaltet wird, sobald eine an den Eingangsanschlüssen (A1, A2) anstehende Spannung (U1) unter einen einstellbaren Schwellenwert (SW) fällt, und wieder abgeschaltet wird, sobald die an den Eingangsanschlüssen (A1, A2) anstehende Spannung (U1) für eine einstellbare Zeitdauer (tmax) über dem ersten einstellbaren Schwellenwert (SW) und/oder über einem zweiten einstellbaren Schwellenwert liegt.

## Claims

1. Transponder comprising
- an input circuit (EK) with input terminals (A1, A2) for connecting to an antenna
coil (L1) for transmitting data with a base station by means of inductive coupling,
**characterised by**
- a first activatable switch means (T1),
- at least one resistor (R1) connected in series to the first activatable switch means (T1) between the input terminals (A1, A2) of the input circuit (EK), and
- a control unit (SE) configured so that it closes the first switch means (T1) as soon as a voltage (U1) present at the input terminals (A1, A2) drops below a first adjustable threshold value (SW) and interrupts it again as soon as the voltage (U1) present at the input terminals (A1, A2) lies above the first adjustable threshold value (SW) and/or above a second adjustable threshold value for an adjustable period (tmax).

2. Transponder as claimed in claim 1, **characterised in that** the transponder is a passive transponder (TR).

3. Transponder as claimed in claim 1 or 2, **characterised in that** the switch means is a transistor, in particular a MOS transistor (T1).

4. Transponder as claimed in one of the preceding claims, **characterised in that** the input circuit (EK) is configured for processing frequencies in a frequency range of 50 kHz to 250 kHz.

5. Transponder as claimed in one of claims 1 to 4, **characterised in that** the input circuit (EK) for transmitting data to the base station comprises a modulation unit with an activatable voltage limiting unit (BE) which is configured so that it limits the voltage (U1) present at the input terminals (A1, A2) to a first adjustable maximum value (UMAX) or to a second adjustable maximum value (UWD).

6. Method of wirelessly transmitting data by means of inductive coupling between a base station and a transponder (TR), which has an input circuit (EK) with input terminals (A1, A2) for connecting to an antenna coil (L1),
**characterised in that**
an ohmic load (R1) is connected between the input terminals (A1, A2) as soon as a voltage (U1) present at the input terminals (A1, A2) drops below an adjustable threshold value (SW) and is disconnected again as soon as the voltage (U1) present at the input terminals (A1, A2) lies above the first adjustable threshold value (SW) and/or above a second adjustable threshold value for an adjustable period (tmax).

## Revendications

1. Transpondeur avec
un circuit d'entrée (EK) avec des raccordements d'entrée (A1, A2) pour le raccordement d'une bobine antenne (L1) en vue d'une transmission de données avec une station de base par couplage inductif,
**caractérisé par**
un premier moyen de commutation apte à être commandé (T1),
au moins une résistance (R1) qui est montée en boucle, en série avec le premier moyen de commutation apte à être commandé (T1), entre les raccordements d'entrée (A1, A2) du circuit d'entrée (EK), et
une unité de commande (SE) qui est conçue de telle sorte qu'elle déclenche le premier moyen de commutation (T1) dès qu'une tension (U1) appliquée aux raccordements d'entrée (A1, A2) descend sous une première valeur seuil réglable (SW), et l'interrompt à nouveau dès que la tension (U1) appliquée aux raccordements d'entrée (A1, A2) est supérieure, pendant une durée réglable (tmax), à la première valeur seuil réglable (SW) et/ou à une seconde valeur seuil réglable.

2. Transpondeur selon la revendication 1, **caractérisé en ce que** le transpondeur est un transpondeur passif (TR).

3. Transpondeur selon la revendication 1 ou 2, **caractérisé en ce que** le moyen de commutation est constitué par un transistor, en particulier un transistor MOS (T1).

4. Transpondeur selon l'une des revendications précédentes, **caractérisé en ce que** le circuit d'entrée (EK) est conçu pour traiter des fréquences dans une plage de fréquence de 50 kHz à 250 kHz.

5. Transpondeur selon l'une des revendications 1 à 4, **caractérisé en ce que** le circuit d'entrée (EK) pour la transmission de données à la station de base comprend une unité de modulation avec une unité de limitation de tension (BE) apte à être commandée qui est conçue de telle sorte qu'elle limite à une première valeur maximale réglable (UMAX) ou à une seconde valeur maximale réglable (UWD) la tension (U1) appliquée aux raccordements d'entrée (A1, A2).

6. Procédé pour la transmission de données sans fil, par couplage inductif, entre une station de base et un transpondeur (TR) qui comporte un circuit d'entrée (EK) avec des raccordements d'entrée (A1, A2) pour le raccordement d'une bobine antenne (L1),
**caractérisé en ce qu'**une charge ohmique (R1) est connectée entre les raccordements d'entrée (A1, A2) dès qu'une tension (U1) appliquée aux raccordements d'entrée (A1, A2) descend sous une valeur seuil réglable (SW), et est à nouveau déconnectée dès que la tension (U1) appliquée aux raccordements d'entrée (A1, A2) est supérieure, pendant une durée réglable (tmax), à la première valeur seuil réglable (SW) et/ou à une seconde valeur seuil réglable.
